# EUROPEAN PATENT APPLICATION

(11) **EP 3 895 854 A1**
(43) Date of publication of application: **20.10.2021**
(21) Application number: 20911301.8
(22) Date of filing: 24.09.2020
(51) Int. Cl.: B25J 11/00, B25J 9/16

(54) **ROBOT**

(30) Priority: 14.02.2020 CN 202010093432; 14.02.2020 CN 202020170423 U
(71) Applicant: Beijing Baidu Netcom Science and Technology Co., Ltd., Beijing 100085 (CN)
(72) Inventor: LUO, Bingkang, Beijing 100085 (CN); ZHI, Libo, Beijing 100085 (CN); LI, Shiyan, Beijing 100085 (CN)
(74) Representative: Lucke, Andreas
(86) International application number: PCT/CN2020/117349
(87) International publication number: WO 2021/159712

(57) **Abstract**

Embodiments of the present disclosure provide a robot. A specific implementation of the robot includes: a head, a neck, a bottom and a base, which are sequentially connected; the head being provided with an information receiving apparatus and a first information processing apparatus; the neck and the bottom being provided with multiple motion executing apparatuses; the bottom further including a second information processing apparatus; the first information processing apparatus being configured to generate action information based on information received by the information receiving apparatus, and transmit the action information to the second information processing apparatus; the second information processing apparatus being configured to generate at least one control instruction based on the action information, and transmit the generated control instruction to at least one of the motion executing apparatuses; and the at least one of the motion executing apparatuses completing an action based on the control instruction. According to this implementation, the user input is received through the information receiving apparatus, and the actions are completed through the multiple motion executing apparatuses, thereby improving the flexibility of action executing.

## Description

This application claims the priority of Chinese patent application No. 202010093432.7, titled "ROBOT", filed on February 14, 2020, and the priority of Chinese patent application No.202020170423.9, titled "ROBOT", filed on February 14, 2020, the contents of which are incorporated herein by reference in their entireties.

### TECHNICAL FIELD

Embodiments of the present disclosure relate to the field of computer technology, and specifically to a robot.

### BACKGROUND

With the development of artificial intelligence technology, artificial intelligence devices have entered people's life more and more widely. Among them, robots are favored by people. The existing robots are generally large in size and configured to move on the ground or interact with people, and small robots generally have limited mobility.

### SUMMARY

Embodiments of the present disclosure provide a robot.

In a first aspect, the embodiments of the present disclosure provide the robot, including: a head, a neck, a bottom and a base, which are sequentially connected; the head provided with an information receiving apparatus and a first information processing apparatus; the neck and the bottom provided with multiple motion executing apparatuses; the bottom further including a second information processing apparatus; the first information processing apparatus configured to generate action information based on information received by the information receiving apparatus, and transmit the action information to the second information processing apparatus; the second information processing apparatus configured to generate at least one control instruction based on the action information, and transmit the generated control instruction to at least one of the motion executing apparatuses; and the at least one of the motion executing apparatuses completing an action based on the control instruction.

In some embodiments, the neck is provided with a first rotational motion executing apparatus, and the head is connected to the neck through the first rotational motion executing apparatus.

In some embodiments, the bottom is provided with a front-and-back motion executing apparatus and a left-and-right motion executing apparatus ; the first rotational motion executing apparatus arranged in the neck, the front-and-back motion executing apparatus and the left-and-right motion executing apparatus are configured to control a motion of the head.

In some embodiments, the first rotational motion executing apparatus, the front-and-back motion executing apparatus and the left-and-right motion executing apparatus are mounted on a swing bracket; and the front-and-back motion executing apparatus and the left-and-right motion executing apparatus are located in a given mounting plane, and a mounting position of the first rotational motion executing apparatus is perpendicular to the mounting plane.

In some embodiments, the robot further includes a neck housing; and the neck housing is fixed on the swing bracket through the first rotational motion executing apparatus.

In some embodiments, the swing bracket is fixed on a fitting fixing bracket through the front-and-back motion executing apparatus or the left-and-right motion executing apparatus.

In some embodiments, the bottom further includes a body housing; the body housing is connected to the neck housing; and the body housing is fixed on the fixing bracket through a buckle.

In some embodiments, the neck housing is hemispherical.

In some embodiments, the bottom is provided with a second rotational motion executing apparatus; the second rotational motion executing apparatus is fixed on the fixing bracket; and the second rotational motion executing apparatus is configured to drive the bottom to rotate.

In some embodiments, the robot further includes a bottom middle housing and a bottom upper housing; the bottom middle housing is fixedly connected to the bottom upper housing; and the second rotational motion executing apparatus connects the fixing bracket to the bottom upper housing.

In some embodiments, the second rotational motion executing apparatus includes a rotatable component and a body, which are fixedly connected; and the body is fixed on the fixing bracket, and the rotatable component is connected to the bottom upper housing.

In some embodiments, the robot further includes a speaker; and the speaker is connected to the first information processing apparatus.

In some embodiments, the speaker is fixed on the bottom middle housing; and the bottom upper housing and the bottom middle housing are hermetically connected to form a sealed sound cavity.

In some embodiments, the bottom middle housing is connected to the base through a plane bearing.

In some embodiments, the head is provided with a display component, and the display component is configured to display an expression.

According to the robot provided by the embodiments of the present disclosure, the head, the neck, the bottom and the base are sequentially connected; the head is provided with the information receiving apparatus and the first information processing apparatus; the neck and the bottom are provided with the multiple motion executing apparatuses; the bottom further includes the second information processing apparatus; the first information processing apparatus is configured to generate the action information based on the information received by the information receiving apparatus, and transmit the action information to the second information processing apparatus; the second information processing apparatus is configured to generate the at least one control instruction based on the action information, and transmit the generated control instruction to the at least one of the motion executing apparatuses; and the at least one of the motion executing apparatuses completes the action based on the control instruction. According to the robot of these embodiments, the user input is received through the information receiving apparatus, and the actions are completed through the multiple motion executing apparatuses, thereby improving the flexibility of action executing.

### BRIEF DESCRIPTION OF THE DRAWINGS

By reading the detailed description of nonlimiting embodiments with reference to the following accompanying drawings, other features, objects and advantages of the present disclosure will become more apparent.
Fig. 1 is a schematic structural diagram of an embodiment of a robot according to the present disclosure;
Fig. 2 is a schematic diagram of connections of apparatuses inside the robot shown in Fig. 1;
Fig. 3 is a schematic structural diagram of another embodiment of the robot according to the present disclosure;
Fig. 4 is a flowchart of yet another embodiment of the robot according to the present disclosure;
Fig. 5 is a schematic structural diagram of a swing bracket of the robot shown in Fig. 4; and
Fig. 6 is a schematic structural diagram of a fixing bracket of the robot shown in Fig. 4.

### DETAILED DESCRIPTION OF EMBODIMENTS

The present disclosure will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

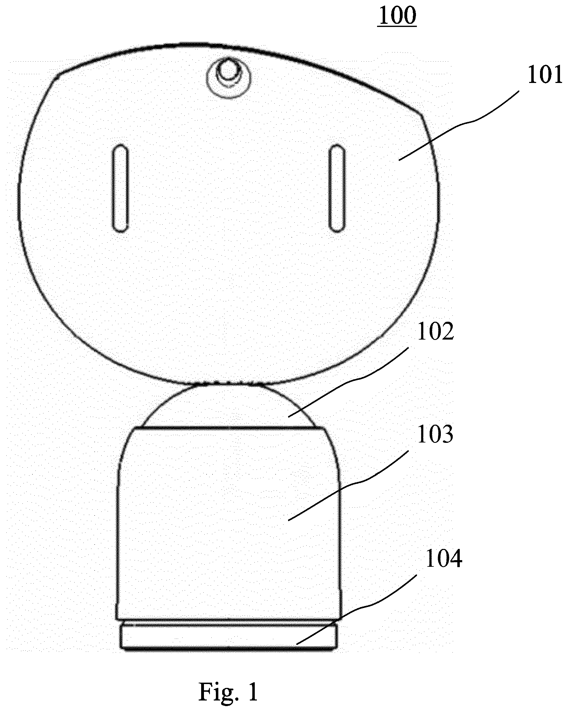

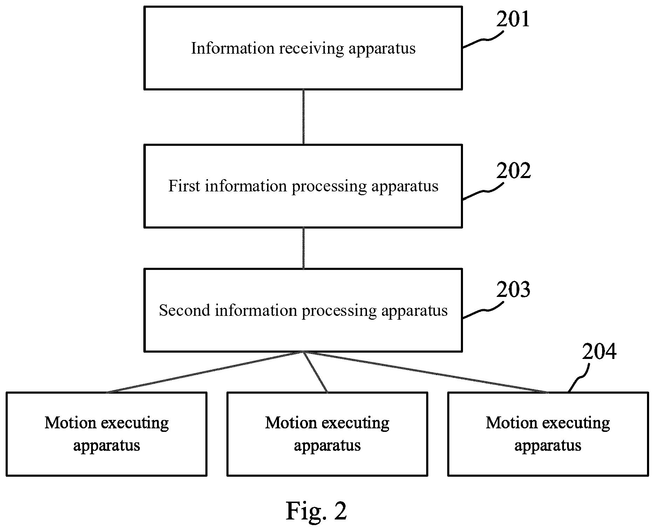

Fig. 1 shows a schematic structural diagram 100 of a robot according to the present disclosure, and Fig. 2 shows a schematic diagram of connections of apparatuses inside the robot. As shown in Fig. 1, A robot 100 includes a head 101, a neck 102, a bottom 103 and a base 104, which are sequentially connected. The head 101 is provided with an information receiving apparatus 201 and a first information processing apparatus 202 (the mounting positions of the information receiving apparatus 201 and the first information processing apparatus 202 are not shown).

The information receiving apparatus 201 may include various apparatuses capable of receiving external information, such as a microphone array and a camera. The microphone array is configured to receive a speech input of a user, and the camera is configured to capture external images or videos. The information receiving apparatus 201 may transmit the received information to the first information processing apparatus 202.

After receiving the information, the first information processing apparatus 202 may perform processing, such as speech recognition and image recognition, on the information to determine the user input to the robot. The first information processing apparatus 202 may respond to the user input to generate action information. In practical applications, the first information processing apparatus 202 may be a control board. Specifically, the first information processing apparatus 202 may extract a keyword of the user input, and search for action information corresponding to the keyword. Here, the robot may pre-obtain the a mapping relationship between keywords and action information, so that after determining the keyword, the corresponding action information may be quickly determined. In this embodiment, the action information may be a series of action sequences, composed of a series of character strings. The action information may include information such as a motion direction and a motion sequence of parts. For example, the action information may be that the head moves up and down three times after rotating 180 degrees counterclockwise.

The neck 102 and bottom 103 of the robot may be provided with multiple motion executing apparatuses 204. The motion executing apparatuses 204 may connect different components, and drive the motions of the components to complete an action. In practical applications, the motion executing apparatuses may be implemented by a steering gear. The steering gear is a small apparatus with an output shaft. When the steering gear receives a control signal, the output shaft may be turned to a specific position. As long as the control signal remains unchanged, the servo mechanism maintains the angular position of the shaft unchanged. If the control signal changes, the position of the output shaft changes accordingly.

The bottom 103 further includes a second information processing apparatus 203. The second information processing apparatus 203 may receive the action information transmitted by the first information processing apparatus 202. The second information processing apparatus 203 may parse the action information to obtain multiple control instructions. Specifically, the second information processing apparatus 203 may generate a control instruction for each motion executing apparatus based on a motion characteristic of each motion executing apparatus, a motion direction of each part, and a motion sequence of parts. The second information processing apparatus 203 may transmit the generated control instruction to each motion executing apparatus, so that each motion executing apparatus executes the control instruction to complete the action. In specific applications, the second information processing apparatus 203 may be a control board.

For example, the robot includes a motion executing apparatus a for controlling the rotation of the head and a motion executing apparatus b for controlling the up-and-down motion of the head. The second information processing apparatus 203 may first transmit a rotation instruction a to the motion executing apparatus a, so that the motion executing apparatus a drives the head to rotate 180 degrees counterclockwise. Then, the second information processing apparatus 203 may transmit a motion instruction b to the motion executing apparatus b to drive the head to move up and down three times.

In some alternative implementations of this embodiment, the head 101 may alternatively be provided with a display component. The display component may be an LED display screen, and the display component may be configured to display an expression to enrich human-computer interaction.

In some alternative implementations of this embodiment, the neck 102 is provided with a first rotational motion executing apparatus, and the bottom 103 is provided with multiple motion executing apparatuses. The head 101 is connected to the neck 102 through the first rotational motion executing apparatus.

In this implementation, a through hole may be arranged under the head 101, and an output shaft of the first rotational motion executing apparatus is connected to the head 101 through the through hole. The first rotational motion executing apparatus may be configured to control the rotational motion of the head 101, which may realize rotation at any angle and in any direction.

In some alternative implementations of this embodiment, the bottom 103 may be provided with a front-and-back motion executing apparatus and a left-and-right motion executing apparatus. The first rotational motion executing apparatus of the neck 102 controls the motion of the head 101 together with the front-and-back motion executing apparatus and the left-and-right motion executing apparatus. Specifically, the front-and-back motion executing apparatus may control the head 101 to move in the forward and backward directions, and the left-and-right motion executing apparatus may control the head 101 to move in the leftward and rightward directions. The specific distances in which the head 101 moves in the forward and backward directions and the leftward and rightward directions are determined by the control instructions. It should be appreciated that the forward, backward, leftward and rightward directions herein are relative to the robot. The forward direction refers to the direction faced by the head 101 of the robot in the normal state, and the opposite direction is the backward direction, and the left side is the leftward direction, and the right side is the rightward direction.

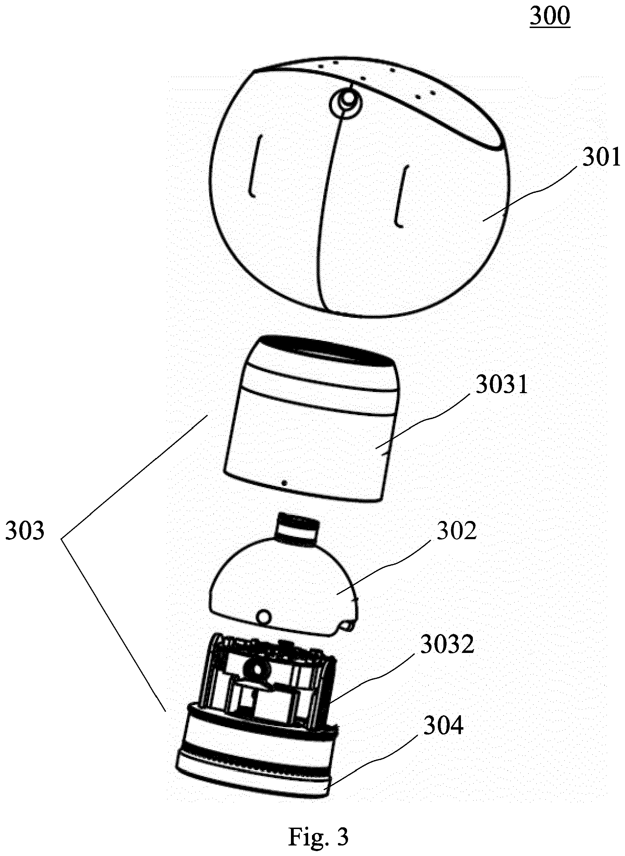

Fig. 3 shows an exploded schematic diagram of a whole machine of an embodiment of the robot according to the present disclosure. A robot 300 includes a head 301, a neck 302, a bottom 303 and a base 304. The bottom 303 includes a body housing 3031 and a bottom body 3032.

It can be seen from the figure that the neck 302 includes a neck housing, which is hemispherical and is sleeved on an outer periphery of the first rotational motion executing apparatus. The neck housing serves, on the one hand, to encapsulate the neck of the robot to protect the first rotational motion executing apparatus, and serves, on the other hand, to beautify the appearance of the robot. The hemispherical housing has an upper opening and a lower opening and is mounted in an inverted bowl shape. The first rotational motion apparatus may be inserted into the upper opening that fits the through hole under the head 301, and the first rotational motion executing apparatus connects the head 301 to the neck 302 through the upper opening of the neck housing and a lower opening of the head.

The body housing 3031 may be connected to the neck housing. Specifically, the body housing 3031 is mounted as a sleeve outside the neck housing. The upper portion of the body housing is an arc surface, and the diameter of the upper opening of the body housing is smaller than the maximum diameter of the neck housing to catch the neck housing. The lower portion of the body housing 3031 is cylindrical and is mounted as a sleeve outside the bottom body 3032 for protecting other components in the bottom body 3032.

The bottom body 3032 is arranged on the base 305 and may be rotated relative to the base 305, so as to drive the overall rotation of the robot. In order to smooth the rotation of the robot, a plane bearing is provided between the bottom body 3032 and the base 305.

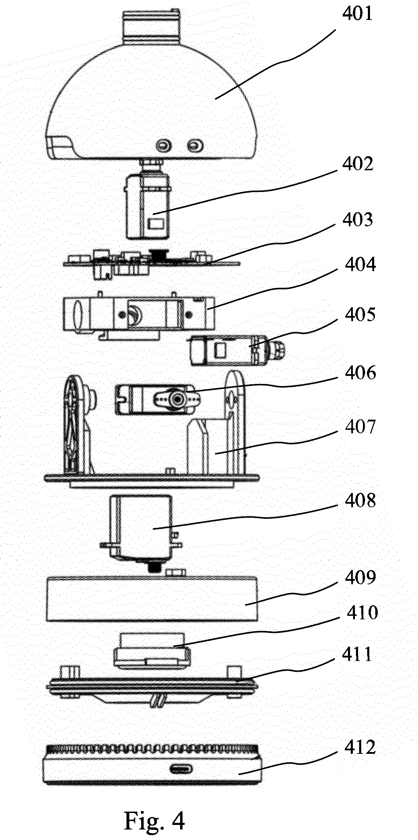

Further referring to Fig. 4, Fig. 4 shows an exploded schematic diagram of the neck and bottom body of the robot according to the present disclosure. As shown in Fig. 4, the figure includes a neck housing 401, a first rotational motion executing apparatus 402, a second information processing apparatus 403, a swing bracket 404, a left-and-right motion executing apparatus 405, a front-and-back motion executing apparatus 406, a fixing bracket 407, a second rotational motion executing apparatus 408, a bottom upper housing 409, a speaker 410, a bottom middle housing 411 and a base 412.

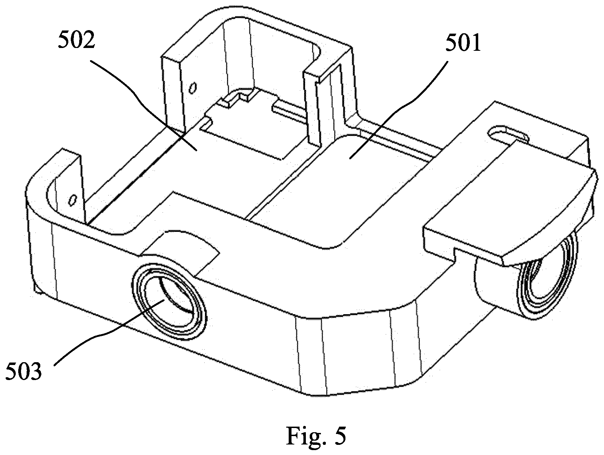

The first rotational motion executing apparatus 402, the front-and-back motion executing apparatus 405 and the left-and-right motion executing apparatus 406 are mounted on the swing bracket 404. The front-and-back motion executing apparatus 405 and the left-and-right motion executing apparatus 406 are located in a given mounting plane, and a mounting position of the first rotational motion executing apparatus 402 is perpendicular to the mounting plane. The swing bracket 404 (as shown in Fig. 5) is provided with two mounting positions 501 and 502 whose sizes fit the left-and-right motion executing apparatus 405 and the front-and-back motion executing apparatus 406. The left-and-right motion executing apparatus 405 and the front-and-back motion executing apparatus 406 are mounted in the two mounting positions 501 and 502, respectively, which are located in a given plane.

The neck housing 401 is fixed on the swing bracket 404 through the first rotational motion executing apparatus 402. Specifically, an end of the first rotational motion executing apparatus 402 is nested in the upper opening of the neck housing 401, and the other end of the first rotational motion executing apparatus 402 is fixed on the swing bracket 404.

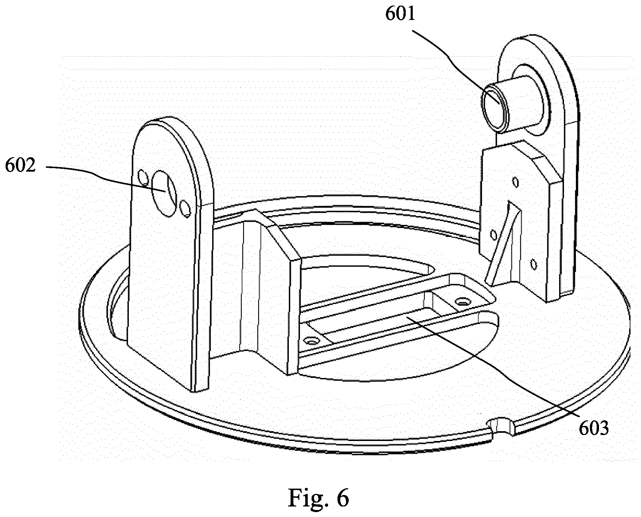

The swing bracket 404 is fixed on a fixing bracket 407 (as shown in Fig. 6). Specifically, a side of the swing bracket 404 is provided with a blind hole (shown as 503 in Fig. 5), and a surface where the blind hole 503 is located faces away from the mounting position 501. The fixing bracket 407 includes a protrusion (shown as 601 in Fig. 6) fitting the blind hole 503, and the protrusion 601 may be inserted into the blind hole 503. The left-and-right motion executing apparatus 405 or the front-and-back motion executing apparatus 406 mounted on the swing bracket 404 has an output shaft. The fixing bracket 407 is provided with a through hole (shown as 602 in Fig. 6) fitting the output shaft, and the output shaft may be inserted into the through hole 602. Thus, the swing bracket 404 may be fixed on the fixing bracket 407, and the swing bracket 404 may swing backwards and forwards or leftwards and rightwards relative to the fixing bracket 407.

In this embodiment, the bottom is further provided with a second rotational motion executing apparatus 408. The second rotational motion executing apparatus 408 is fixed on the fixing bracket 407, and the second rotational motion executing apparatus 408 may drive the bottom to rotate relative to the base 412. It should be appreciated that the second rotational motion executing apparatus 408 may be fixed on the fixing bracket 407 in various ways. Specifically, the fixing bracket 407 is provided with a limiting hole (shown as 603 in Fig. 6), and the second rotational motion executing apparatus 408 may be inserted into the limiting hole 603 to fix them together.

The bottom further includes the bottom upper housing 409, the speaker 410 and the bottom middle housing 411. The speaker 410 is fixed on the bottom middle housing 411, and the bottom upper housing 409 and the bottom middle housing 411 are hermetically and fixedly connected to form a sealed sound cavity.

In some implementations, the second rotational motion executing apparatus 408 may include a rotatable component and a body, which are fixedly connected. The body is fixed on the fixing bracket 407, and the rotatable component is connected to the bottom upper housing 409.

Specifically, the rotatable component of the second rotational motion executing apparatus 408 is an output shaft, and the surface of the bottom upper housing 409 may be provided with a fixing component fitting the output shaft. In this way, the second rotational motion executing apparatus 408 may drive the bottom upper housing 409 to rotate. Since the bottom upper housing 409 and the bottom middle housing 411 are hermetically connected, the bottom may also be driven to rotate.

In this embodiment, the speaker 410 may be connected to the first information processing apparatus mounted in the head. The second information processing apparatus 403 is configured to be connected to the first rotational motion executing apparatus 402, the left-and-right motion executing apparatus 405, the front-and-back motion executing apparatus 406 and the second rotational motion executing apparatus 408, so as to control each motion executing apparatus to complete the action.

The above description only provides an explanation of the preferred embodiments of the present disclosure and the technical principles used. It should be appreciated by those skilled in the art that the scope of disclosure involved in the embodiments of the present disclosure is not limited to the technical solutions formed by the particular combinations of the above technical features. The inventive scope should also cover other technical solutions formed by any combinations of the above technical features or equivalent features thereof without departing from the concept of the disclosure, such as technical solutions formed through the above features and technical features having similar functions disclosed (or not disclosed) in the embodiments of the present disclosure being replaced with each other.

## Claims

1. A robot, comprising: a head, a neck, a bottom and a base, which are sequentially connected, wherein
the head is provided with an information receiving apparatus and a first information processing apparatus;
the neck and the bottom are provided with a plurality of motion executing apparatuses;
the bottom further comprises a second information processing apparatus;
the first information processing apparatus is configured to generate action information based on information received by the information receiving apparatus, and transmit the action information to the second information processing apparatus;
the second information processing apparatus is configured to generate at least one control instruction based on the action information, and transmit the generated control instruction to at least one of the motion executing apparatuses; and
the at least one of the motion executing apparatuses is configured to complete an action based on the control instruction.

2. The robot according to claim 1, wherein the neck is provided with a first rotational motion executing apparatus, and the bottom is provided with a plurality of motion executing apparatuses; and
the head is connected to the neck through the first rotational motion executing apparatus arranged in the neck.

3. The robot according to claim 1, wherein the bottom is provided with a front-and-back motion executing apparatus and a left-and-right motion executing apparatus ; and
the first rotational motion executing apparatus arranged in the neck, the front-and-back motion executing apparatus and the left-and-right motion executing apparatus are configured to control a motion of the head.

4. The robot according to claim 3, wherein the first rotational motion executing apparatus, the front-and-back motion executing apparatus and the left-and-right motion executing apparatus are mounted on a swing bracket; and
the front-and-back motion executing apparatus and the left-and-right motion executing apparatus are located in a given mounting plane, and a mounting position of the first rotational motion executing apparatus is perpendicular to the mounting plane.

5. The robot according to claim 4, wherein the robot further comprises a neck housing; and
the neck housing is fixed on the swing bracket through the first rotational motion executing apparatus.

6. The robot according to claim 4, wherein the swing bracket is fixed on a fitting fixing bracket through the front-and-back motion executing apparatus or the left-and-right motion executing apparatus.

7. The robot according to claim 6, wherein the robot further comprises a body housing;
the body housing is connected to the neck housing; and
the body housing is fixed on the fixing bracket through a buckle.

8. The robot according to any one of claims 5 to 7, wherein the neck housing is hemispherical.

9. The robot according to claim 6, wherein the bottom is provided with a second rotational motion executing apparatus;
the second rotational motion executing apparatus is fixed on the fixing bracket; and
the second rotational motion executing apparatus is configured to drive the bottom to rotate.

10. The robot according to claim 9, wherein the robot further comprises a bottom middle housing and a bottom upper housing;
the bottom middle housing is fixedly connected to the bottom upper housing; and
the second rotational motion executing apparatus connects the fixing bracket to the bottom upper housing.

11. The robot according to claim 10, wherein the second rotational motion executing apparatus comprises a rotatable component and a body fixedly connected to the rotatable component; and
the body is fixed on the fixing bracket, and the rotatable component is connected to the bottom upper housing.

12. The robot according to claim 10, wherein the robot further comprises a speaker; and
the speaker is connected to the first information processing apparatus.

13. The robot according to claim 12, wherein the speaker is fixed on the bottom middle housing; and
the bottom upper housing and the bottom middle housing are hermetically connected to form a sealed sound cavity.

14. The robot according to claim 11, wherein the bottom middle housing is connected to the base through a plane bearing.

15. The robot according to claim 1, wherein the head is provided with a display component, and the display component is configured to display an expression.
